**Europäisches Patentamt**

**European Patent Office**

**Office européen des brevets**

(19)

(11) Veröffentlichungsnummer: **0 285 213 B1**

(12) **EUROPÄISCHE PATENTSCHRIFT**

(45) Veröffentlichungstag der Patentschrift: **03.06.92**

(51) Int. Cl.⁵: **C09K 5/06**

(21) Anmeldenummer: **88200545.7**

(22) Anmeldetag: **23.03.88**

(54) **Latentwärmespeichermittel und dessen Verwendung.**

(30) Priorität: **30.03.87 DE 3710508**

(43) Veröffentlichungstag der Anmeldung:
**05.10.88 Patentblatt 88/40**

(45) Bekanntmachung des Hinweises auf die
Patenterteilung:
**03.06.92 Patentblatt 92/23**

(84) Benannte Vertragsstaaten:
**AT CH DE FR GB IT LI**

(56) Entgegenhaltungen:
**US-A- 1 985 632**
**US-A- 3 921 961**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**CH FR GB IT LI AT**

(72) Erfinder: **Gawron, Klaus**
**Florastrasse 12**
**W-5100 Aachen(DE)**
Erfinder: **Schröder, Johann, Dr.**
**Adenauerallee 125a**
**W-5100 Aachen(DE)**
Erfinder: **Huszar, Reinhard, Dr.**
**Kirschentheuer 71**
**A-9152 Strau/Kärnten(AT)**
Erfinder: **Leitner, Johann**
**Richard-Wagner Strasse 7/1**
**A-9020 Klagenfurt(AT)**

(74) Vertreter: **Koch, Ingo, Dr.-Ing. et al**
**Philips Patentverwaltung GmbH Wendenstrasse 35 Postfach 10 51 49**
**W-2000 Hamburg 1(DE)**

**Beschreibung**

Die Erfindung betrifft ein Latentwärmespeichermittel mit Phasenübergang fest-flüssig und umgekehrt auf der Basis von Wasser und Kaliumchlorid mit einem Zusatz von Ammoniumchlorid. Ferner betrifft die Erfindung die Verwendung eines derartigen Latentwärmespeichermittels.

Ein Latentwärmespeichermittel der eingangs genannten Art ist aus dem Seminarbericht von A.S. Strub und H. Ehringer (Herausgeber) "New Ways to Save Energy" Proceedings of the International Seminar held in Brussels, 23-25 October 1979, S. 495-504, bekannt. Eines der darin erwähnten Latentwärmespeichermittel enthält das Eutektikum Kaliumchlorid-Wasser mit 19,54 Gew.% Kaliumchlorid und einen Zusatz von 3 Vol.% des Eutektikums Ammoniumchlorid-Wasser mit 19,5 Gew.% Ammoniumchlorid (Seite 503, Tabelle IV).

Aus DE-A-2 846 988 ist es bekannt, einem Latentwärmespeichermittel, das ein eutektisches Gemisch aus Wasser und einem Salzhydrat enthält, 1 bis 6 Vol.% eines zweiten Wasser-Salzhydrat-Eutektikums zuzusetzen. Ferner wird in der DE-A-2 846 988 eine eutektische Kühllösung aus etwa 2 kg Wasser und etwa 500 g Kaliumchlorid erwähnt, der etwa 1 bis 2% (20 bis 40 g) Glycerin hinzugefügt werden, um die Probleme zu verringern, die durch das Ausdehnen beim Erstarren der Lösung verursacht werden.

Bei der Herstellung eines Latentwärmespeichermittels aus einer eutektischen $KCl/H_2O$-Mischung und einer eutektischen $NH_4Cl/H_2O$-Mischung müssen beide Mischungen genau eutektisch eingestellt werden. Dabei können in der Praxis Dosierungsprobleme auftreten.

Bei den Untersuchungen, die zur Erfindung geführt haben, hat sich ferner herausgestellt, daß die Anwendung von Kältespeichern, die mit den Eutektika Kaliumchlorid-Wasser und Ammoniumchlorid-Wasser in den genannten Mengenverhältnissen gefüllt sind, bei der Speiseeisherstellung von Nachteil ist, wenn der Kältespeicher einer Speiseeismaschine zu seiner Regenerierung in das Tiefkühlfach eines gebräuchlichen Kühlschranks gelegt wird und darin solange liegen bleibt, bis das Speichermittel wieder vollkommen fest geworden ist, und wenn die im Tiefkühlfach zu erwartende Temperatur von -18°C durch schlechte Einstellung des Kühlschranks oder mäßige Isolation desselben nicht ganz oder nur sehr langsam erreicht wird. Dies ist nach den obenerwähnten Untersuchungen bei vielen 3-Sterne-Kühlschränken der Fall. Dadurch kann sich die Regenerierzeit von Kältespeichern auf bis zu 24 Stunden verlängern und in ungünstigen Fällen wird das Speichermittel überhaupt nicht gefrieren.

Aufgabe der Erfindung ist es, ein Latentwärmespeichermittel zu schaffen, das die Regenerierung eines damit gefüllten Kältespeichers innerhalb kurzer Zeit sicherstellt.

Diese Aufgabe wird erfindungsgemäß dadurch gelöst, daß das Latentspeichermittel aus einer Wasser, 18 bis 22 Gew.% Kaliumchlorid und 0,2 bis 1 Gew.% Ammoniumchlorid enthaltenden Mischung besteht, welcher 2 bis 6 Vol.% Glycerin zugesetzt ist. handelsüblichen Kühlschranks wird bereits in höchstens 17 Stunden erreicht.

Ein besonders günstiges Latentwärmespeichermittel nach der Erfindung enthält 79,89 Gew.% Wasser, 19,56 Gew.% Kaliumchlorid, 0,55 Gew.% Ammoniumchlorid und einen Zusatz von 3 Vol.% Glycerin. Die Schmelztemperatur dieses Speichermittels liegt bei -12,8°C. Diese Temperatur ist für die Speiseeisherstellung besonders günstig.

Um eine Unterkühlung des Speichermittels zu unterdrücken, ist es zweckmäßig, dem Speichermittel feste Keimbildner, z.B. poröses $Al_2O_3$ oder MgO, in Mengen von 0,05 bis 1 Gew.% zuzusetzen.

Das erfindungsgemäße Latentwärmespeichermittel findet vorzugsweise in einem Kältespeicher für die Speiseeisherstellung Verwendung. Derartige Kältespeicher sind z.B. in EP-A-O 206 427, O 206 428 und O 206 429 beschrieben.

Bei der erfindungsgemäßen Zugabe von Glycerin entfällt die zuvor erwähnte Einstellung eines Eutektikums, da Glycerin in der korrekten Konzentration handelsüblich erhältlich ist. Von Vorteil ist dabei ferner, daß sich das Glycerin leicht mit der Salzlösung mischt. Die Zusatzmenge an Glycerin bleibt dabei so gering, daß sich keine wesentlichen Änderungen der Schmelzwärme ergeben.

Da der Phasenübergang eines Latentwärmespeichermittels mit einer Volumenänderung verbunden ist, muß dafür gesorgt werden, daß das Kristallisieren des Speichermittels möglichst gleichmäßig erfolgt und lokale Kristallisationsbereiche vermieden werden. Dieses Problem wird durch Zugabe von $NH_4Cl$ gelöst.

Das erfindungsgemäße Latentwärmespeichermittel hat einerseits eine für die Speiseeisherstellung optimale Schmelztemperatur, die andererseits einen genügend großen Unterschied zur Temperatur im Gefrierfach eines Kühlschrankes hat, um ausreichend schnell zu kristallisieren und dabei Kälte zu speichern.

Beispiel

Ein Kältespeichermittel für die Speiseeisherstellung mit dem Schelzpunkt -12,8°C besteht aus

$$19,00 \text{ kg KCl}$$
$$0,53 \text{ kg NH}_4\text{Cl}$$
$$77,60 \text{ kg H}_2\text{O}$$
$$\underline{2,87 \text{ kg C}_3\text{H}_8\text{O}_3 \text{ (Glycerin)}}$$
$$100,00 \text{ kg Gesamt}$$
$$================$$

**Patentansprüche**

1. Latentwärmespeichermittel mit Phasenübergang fest-flüssig und umgekehrt auf der Basis von Wasser und Kaliumchlorid mit einem Zusatz von Ammoniumchlorid, dadurch gekennzeichnet, daß das Latentspeichermittel aus einer Wasser, 18 bis 22 Gew.% Kaliumchlorid und 0,2 bis 1 Gew.% Ammoniumchlorid enthaltenden Mischung besteht, welcher 2 bis 6 Vol.% Glycerin zugesetzt ist.

2. Latentwärmespeichermittel nach Anspruch 1, dadurch gekennzeichnet, daß es 79,89 Gew.% Wasser, 19,56 Gew.% Kaliumchlorid, 0,55 Gew.% Ammoniumchlorid und einen Zusatz von 3 Vol.% Glycerin enthält.

3. Latentwärmespeichermittel nach Anspruch 1 oder 2, dadurch gekennzeichnet, daß es feste Keimbildner in Mengen von 0,05 bis 1 Gew.% enthält.

4. Verwendung des Latentwärmespeichermittels nach Anspruch 1, 2 oder 3 in einem Kältespeicher für die Speiseeisherstellung.

**Claims**

1. A latent heat accumulator medium with solid-liquid and liquid-solid phase transition on the basis of water and potassium chloride with an addition of ammonium chloride, characterized in that the latent heat accumulator medium consists of a mixtures which comprises water, 18 to 22 % by weight of potassium chloride, 0.2 to 1 % by weight of ammonium chloride and an addition of 2 to 6 % by volume of glycerin.

2. A latent heat accumulator medium as claimed in Claim 1, characterized in that it comprises 79.89 % by weight of water, 19.56 % by weight of potassium chloride, 0.55 % by weight of ammonium chloride and an addition of 3 % by volume of glycerin.

3. A latent heat accumulator medium as claimed in Claim 1 or 2, characterized in that it comprises solid nucleating agents in quantities of 0.05 to 1 % by weight.

4. The use of the latent heat accumulator medium as claimed in Claim 1, 2 or 3, in a cold accumulator for the making of ice-cream.

**Revendications**

1. Milieu accumulateur de chaleur latente présentant une transition de phase solide-liquide et inversement à base d'eau et de chlorure de potassium additionné de chlorure d'ammonium, caractérisé en ce que le milieu accumulateur de chaleur latente est constitué par un mélange contenant de l'eau, 18 à 22% en poids de chlorure de potassium et 0,2 à 1% en poids de chlorure d'ammonium, ce mélange étant additionné de 2 à 6% en volume de glycérine.

2. Milieu accumulateur de chaleur latente selon la revendication 1, caractérisé en ce qu'il contient

79,89% en poids d'eau, 19,56% en poids de chlorure de potassium, 0,55 % en poids de chlorure d'ammonium et une addition de 3% en volume de glycérine.

3. Milieu accumulateur de chaleur latente selon la revendication 1 ou 2, caractérisé en ce qu'il contient des formateurs de germes solides dans des quantités de 0,05 à 1% en poids.

4. Application du milieu accumulateur de chaleur latente selon les revendications 1, 2 ou 3, dans un accumulateur de froid pour la préparation de crème glacée.